# EUROPÄISCHE PATENTSCHRIFT

(11) **EP 0 719 667 B1**
(45) Veröffentlichungstag und Bekanntmachung des Hinweises auf die Patenterteilung: **04.03.1998**
(21) Anmeldenummer: 95120013.8
(22) Anmeldetag: 19.12.1995
(51) Int. Cl.: B60J 7/16, E05C 17/34

(54) **Ausstellvorrichtung für ein Hebedach eines Fahrzeuges**
Control system for a tilting roof of a motor vehicle
Commande d'actionnement pour toit pivotant d'un véhicule automobile

(30) Priorität: 30.12.1994 DE 4447185
(43) Veröffentlichungstag der Anmeldung: 03.07.1996
(73) Patentinhaber: WEBASTO THERMOSYSTEME GmbH, D-82131 Stockdorf (DE)
(72) Erfinder: Hausrath, Udo, D-82319 Hadorf (DE); Plender, Jan, NL-5836 BS Sambeek (NL); Plettrichs, Ulf, D-86862 Dillishausen (DE); Breu, Ludwig, D-82223 Eichenau (DE)
(74) Vertreter: Wiese, Gerhard

(56) Entgegenhaltungen:
- EP-A- 0 495 198
- EP-A- 0 495 564
- CH-A- 654 533
- GB-A- 2 163 479

## Beschreibung

Die Erfindung betrifft eine Ausstellvorrichtung für eine Hebedach eines Fahrzeuges mit einem am festen Fahrzeugdach angeordneten Schwenkhebel und mit einem an einem ausstellbaren Deckel angelenkten Ausstellhebel, die durch einen Gelenkbolzen miteinander verbunden sind und die durch parallel zum Gelenkbolzen wirksame, wenigstens ein bewegbares Element aufweisende Rastmittel in mehreren Positionen relativ zueinander verriegelbar sind.

Bei einer aus der DE-A-32 46 396 bekannten Ausstellvorrichtung weist der Rastmechanismus eine Rastscheibe mit mehreren Rastnocken auf, die in entsprechend zur Deckung gebrachte Löcher beider Hebel eingreifen. Bei einer Mehrzahl von Zwischenpositionen zwischen der Schließlage und der vollständigen Ausstellposition des Deckels sind die Durchmesser dieser Rastnocken gering, wodurch sich die Gefahr von deren Abbrechen erhöht.

Der vorliegenden Erfindung liegt die Aufgabe zugrunde, eine gattungsgemäße Ausstellvorrichtung mit einer kompakten und dennoch stabilen Rasteinrichtung zu versehen.

Diese Erfindung wird durch die Merkmale des Patentanspruchs 1 gelöst. Dadurch, daß die Rastmittel durch mehrere abwechselnd zu beiden Seiten versetzt zueinander auf einer Kreisbahn angeordnete Rastausnehmungen und durch zwei abwechselnd mit den Rastausnehmungen der einen oder der anderen Seite in Eingriff bringbare Rastbolzen gebildet wird, kann aufgrund der in der Seitenansicht überlappten Anordnung der Rastausnehmungen der Durchmesser der einzelnen Rastausnehmung und dadurch auch der Durchmesser der mit diesen zusammenwirkenden Rastbolzen erheblich vergrößert werden, ohne die Gesamtabmessungen der Vorrichtung zu vergrößern. Vorteilhafte Ausgestaltungen der Erfindung sind den Unteransprüchen zu entnehmen.

Gemäß einer vorteilhaften Weiterbildung weisen die Rastausnehmungen eine halbkreisförmige Form auf. Da durch die Vergrößerung der Durchmesser der Rastausnehmungen und entsprechend auch der Rastbolzen eine vergrößerte kraftübertragende Fläche zwischen beiden entsteht, kann zur Reduzierung des Materialaufwandes und zur Verkleinerung der Abmessungen der Vorrichtung auf vollkreisförmige Rastausnehmungen verzichtet werden und dagegen eine nach außen offene halbkreisförmige Form derselben gewählt werden.

Vorteilhaft sind die Rastausnehmungen am Schwenkhebel und die Rastbolzen am Ausstellhebel gelagert. Hierdurch lassen sich die Bedienelemente für die achsparallel zum Gelenkbolzen verschiebbaren Rastbolzen ergonomisch günstig für den den Deckel ausstellenden Bediener anordnen.

Zur erhöhten Sicherheit der Rastverbindung ist es vorteilhaft, wenn die Rastbolzen mittels Federn in Richtung auf ihre Eingriffstellung mit den Rastausnehmungen vorbelastet sind.

Vorteilhaft werden die Rastbolzen durch schwenkbar gelagerte Rasthebel betätigt. Durch die Verwendung von Hebeln ist eine ergonomisch günstige Umlenkung der Rastbolzenbewegung und der Betätigungsbewegung möglich. Vorteilhaft ist es ferner, wenn die Federn am Rasthebel angreifen. Durch die hierbei mögliche Ausnutzung einer Hebelwirkung können die Federn entsprechend kleiner ausgelegt werden.

Eine ergonomisch güngstige Bedienung ergibt sich dadurch, daß beide Rasthebel durch Zusammendrücken ihrer freien Enden die Rastbolzen außer Eingriff mit den Rastausnehmungen bringen. Die Rasthebel sind dabei als zweiseitige Hebel ausgelegt, die zum Ausrücken der Rastverbindung an ihren Enden scherenartig zusammengedrückt werden.

Für eine platzsparende Anordnung und eine Erleichterung der Montage ist es vorteilhaft, wenn die Federn als Druckfedern ausgebildet sind, die an der Innenseite der freien Enden der Rasthebel angreifen.

Eine erleichterte Montage und Demontage einer erfindungsgemäßen Ausstellvorrichtung ergibt sich dadurch, daß eine den Schwenkhebel mit dem festen Fahrzeugdach verbindende Schwenkachse von einer U-förmigen Ausnehmung an einer am festen Fahrzeugdach angeordneten Dachflanschplatte und von einer an dieser gegen Federdruck verschiebbar gelagerten Zunge eines Riegels gehalten wird, welcher die Ausnehmung an ihrem offenen Ende verschließt.

Zur Erleichterung der Montage ist es ferner vorteilhaft, wenn die Zunge des Riegels an ihrer Außenseite eine das Einführen der Schwenkachse erleichternde Anschrägung aufweist.

Nachfolgend wird ein Ausführungsbeispiel der Erfindung anhand der Zeichnungen beschrieben. Es zeigt:
- Fig. 1: eine schematische Draufsicht auf ein Fahrzeugdach,
- Fig. 2: eine Seitenansicht einer Ausstellvorrichtung bei geschlossenem Deckel,

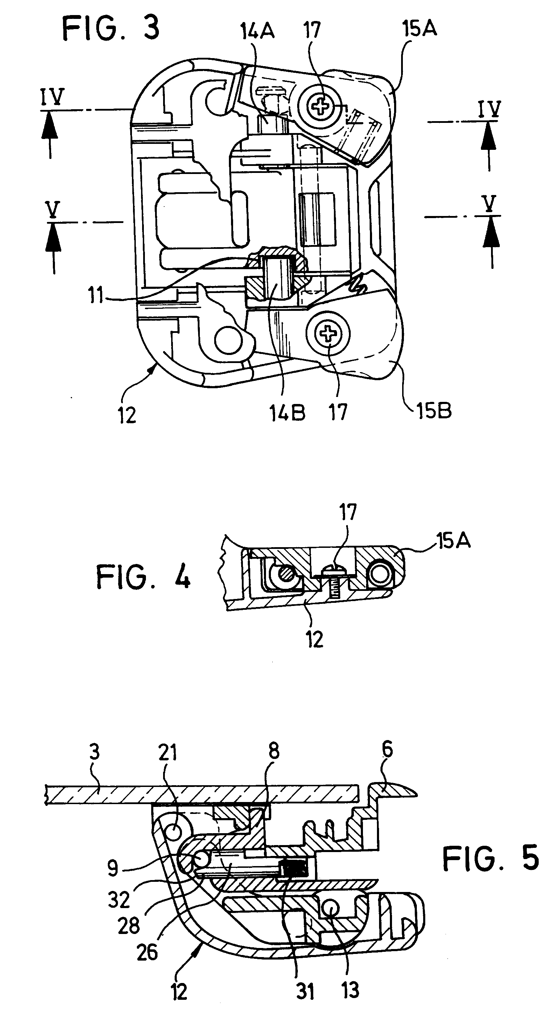

- Fig. 3: eine Draufsicht auf die Ausstellvorrichtung bei geschlossenem Deckel,
- Fig. 4: einen Teilschnitt im Bereich einer Drehachse eines Rasthebels,
- Fig. 5: einen Längsschnitt durch die Mitte der Ausstellvorrichtung gemäß der Linie V-V in Fig. 3 und
- Fig. 6: eine Explosionsdarstellung der gesamten Ausstellvorrichtung.

In einem festen Fahrzeugdach 1 ist eine Dachöffnung 2 vorgesehen, welche mittels eines vorzugsweise aus einem transparenten Material, wie Glas, bestehenden Deckel 3 wahlweise freigebbar oder verschließbar ist. Hierzu ist der Deckel 3 im Bereich seiner Hinterkante mit einer insgesamt mit 4 bezeichneten Ausstellvorrichtung versehen, welche eine Schwenkbewegung um eine nahe der Vorderkante 5 des Deckels 3 angeordnete Schwenkachse ermöglicht.

Das insbesondere zu einem nachträglichen Einbau in Fahrzeug vorgesehene Hebedach wird mittels eines Dachrahmens 6 von oben her in die Dachöffnung 2 eingesetzt und mittels eines mit dem Dachrahmen 6 verbundenen Innenrahmen 7 am festen Fahrzeugdach 1 befestigt. Die Ausstellvorrichtung 4 ist etwa in der Mitte der Hinterkante des Dachrahmens 6 mittels einer an dieser über Bohrungen 25 und diese durchdringende Befestigungsmittel befestigten Dachflanschplatte 8 angeordnet. An der Dachflanschplatte 8 ist mittels einer Schwenkachse 9 ein Schwenkhebel 10 schwenkbar gelagert.

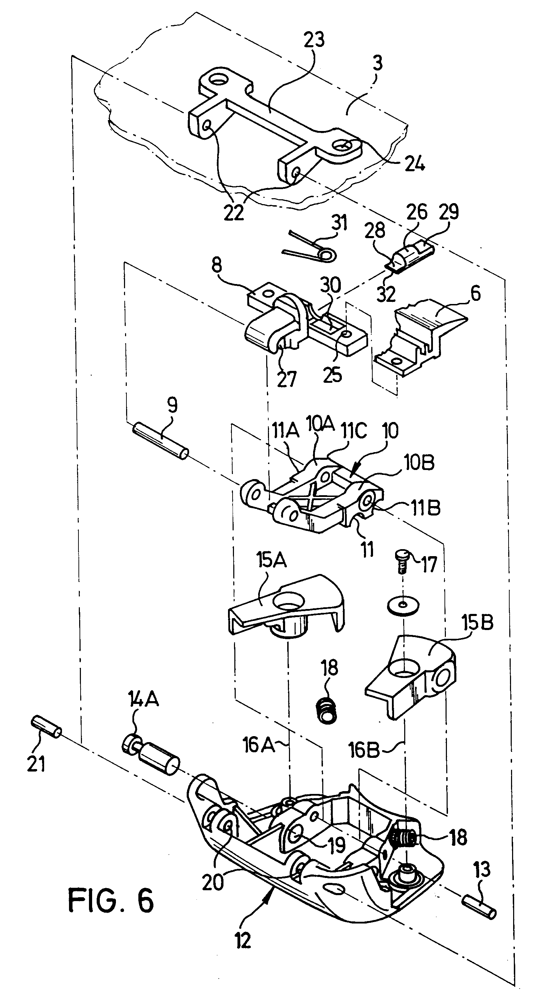

Das andere Ende des Schwenkhebels 10 ist mittels eines Gelenkbolzens 13 mit einem Ausstellhebel 12 verbunden. Zur Verbreiterung der Abstützbasis der Schwenkachse 9 und des Gelenkbolzens 13 weist der Schwenkhebel 10 zwei voneinander beabstandete, fest miteinander verbundene Schenkel 10A und 10B auf. Auf einer zum Gelenkbolzen 13 konzentrischen Kreisbahn sind an beiden Schenkeln 10A und 10B des Schwenkhebels 10 jeweils zwei halbkreisförmige, nach außen offene Rastausnehmungen 11, 11A, 11B und 11C angeordnet. Die Anordnung ist dabei erfindungsgemäß so getroffen, daß die Rastausnehmungen 11 und 11B am Schenkel 10B in Umfangsrichtung versetzt zu den in Fig. 6 nicht sichtbaren Rastausnehmungen 11A und 11C angeordnet sind. Die Rastausnehmungen 11, 11A, 11B und 11C überlappen sich dadurch in der seitlichen Projektion. Hierdurch kann die Größe der einzelnen Rastausnehmungen 11, 11A, 11B und 11C vergrößert werden, ohne insgesamt die Abmessungen des Schwenkhebels 10 zu vergrößern. Zu einer Minimierung der Abmessungen des Schwenkhebels trägt es auch bei, daß die Rastausnehmungen 11, 11A, 11B und 11C eine halbkreisförmige, nach außen offene Form aufweisen.

Mit den Rastausnehmungen 11, 11A, 11B und 11C wirken zwei Rastbolzen 14A bzw. 14B zusammen, welche parallel zum Gelenkbolzen 13 verschiebbar am Ausstellhebel 12 in Bohrungen 19 gelagert sind. Die Rastbolzen 14A bzw. 14B weisen nahe an ihrem äußeren Ende einen den Durchmesser reduzierenden Einstich auf, in welchen jeweils ein Ende eines Rasthebels 15A bzw. 15B eingreift. Die Rasthebel 15A bzw. 15B sind ihrerseits in von Schraubbolzen 17 gebildeten Drehachsen 16A bzw. 16B am Ausstellhebel 12 gelagert. Die Drehachsen 16A bzw. 16B befinden sich dabei etwa in der Mitte der Rasthebel 15A bzw. 15B. Die den Eingriffstellen zu den Rastbolzen 14A bzw. 14B gegenüberliegenden freien Enden der Rasthebel 15A bzw. 15B sind an ihren Außenseiten mit farbig abgesetzten Griffstücken versehen. An der den Griffstücken gegenüberliegenden Innenseite der freien Enden der Rasthebel 15A bzw. 15B greift jeweils eine als Druckfeder ausgelegte Feder 18 an, welche sich mit ihrem anderen Ende an einer innenliegenden Wand des Ausstellhebels 12 abstützt. Durch die Federn 18 sind die Rasthebel 15A bzw. 15B in Richtung auf eine Eingriffstellung der Rastbolzen 14A bzw. 14B in eine der Rastausnehmungen 11, 11A, 11B, 11C vorgespannt. Durch ein Zusammendrücken der Griffstücke werden die Rastbolzen 14A bzw. 14B hingegen aus der Eingriffstellung mit einer der Rastausnehmungen 11, 11A, 11B, 11C gegen den Druck der Federn 18 nach außen bewegt. Durch die in der seitlichen Projektion in Umfangsrichtung versetzte Anordnung der Rastausnehmungen 11, 11A, 11B, 11C an beiden Schenkeln 10A bzw. 10B des Schwenkhebels 10 befindet sich immer nur einer der beiden Rastbolzen 14A oder 14B in Eingriff mit einer der Rastausnehmungen 11, 11A, 11B, 11C. Durch Zusammendrücken der Griffstücke an den Rasthebeln 15A, 15B geraten die Rastbolzen 14A, 14B außer Eingriff mit der jeweiligen Rastausnehmung 11, 11A, 11B, 11C, wodurch eine Relativbewegung des Schwenkhebels 10 bezüglich des Ausstellhebels 12 um den Gelenkbolzen 13 ermöglicht wird.

Der Ausstellhebel 12 weist an seinem nach oben gerichteten Ende parallel zum Gelenkbolzen 13 verlaufenden Bohrungen 20 auf, in welche Bolzen 21 einführbar sind, welche andererseits in Bohrungen 22 an zwei voneinander beabstandeten Laschen einer Deckelflanschplatte 23 eingreifen. Die Deckelflanschplatte 23 ist ihrerseits mittels durch Bohrungen 24 verlaufende Befestigungsmittel, wie Schrauben, mit dem Deckel 3 verbunden.

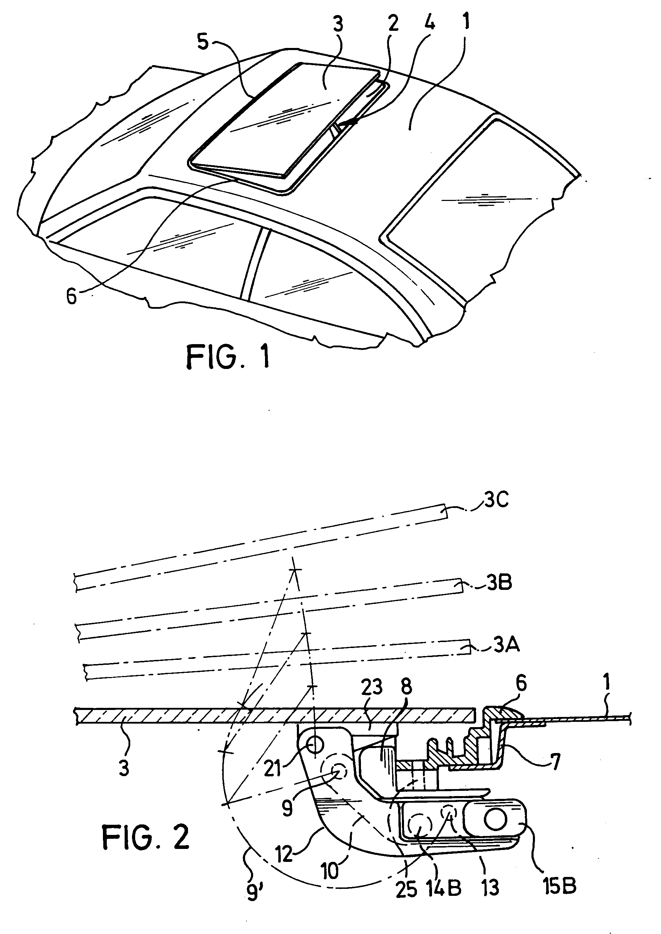

Schwenkhebel 10 und Ausstellhebel 12 sind so dimensioniert und die Abstände der Schwenkachse 9, des Gelenkbolzens 13 und der Bolzen 21 so gewählt, daß bei geschlossenem Deckel 3, wie in Fig. 2 zu ersehen, die Verbindungslinie zwischen Bolzen 21 und Gelenkbolzen 13 oberhalb der Verbindungslinie zwischen Schwenkachse 9 und Gelenkbolzen 13 verläuft. Hierdurch ergibt sich in Schließposition des Deckels 3 eine Totpunktverriegelung der Ausstellvorrichtung 4.

Ausgehend von der in Fig. 2 in durchgezogenen Linien dargestellten Schließposition des Deckels 3 wird durch Zusammendrücken der Griffstücke an den Rasthebeln 15A, 15B eine Entriegelung des Rastbolzens 14B und der Rastausnehmung 11 vorgenommen, wodurch der Ausstellhebel 12 gleichzeitig auf einer Kreisbahn 9' um die Schwenkachse 9 in eine erste Ausstellposition des Deckels 3 gebracht werden kann, die in Fig. 2 in strichpunktierten Linien mit 3A angezogen ist. Werden bei dieser Schwenkbewegung die Griffstücke an den Rasthebeln 15A, 15B nicht mehr zusammengedrückt, so gerät durch den Druck der Feder 18 auf den Rasthebel 15A automatisch der Rastbolzen 14A mit der in Fig. 6 verdeckt auf der anderen Seite liegenden Rastausnehmung 11A in Eingriff. Die Rastausnehmung 11A liegt dabei in der Seitenansicht zwischen den Rastausnehmungen 11 und 11B umfangsmäßig versetzt.

Durch erneutes Zusammendrücken der Griffstücke an den freien Enden der Rasthebel 15A, 15B wird der Rastbolzen 14A mit der Rastausnehmung 11A außer Eingriff gebracht, und eine Zurückschwenken des Ausstellhebels 12 in die zuvor eingenommene Schließposition oder ein weiteres Aufschwenken längs der Kreisbahn 9' in eine nächste Ausstellposition ermöglicht, welche in Fig. 2 in strichpunktierten Linien mit 3B angezogen ist. In dieser Position gerät durch die Beaufschlagung mittels der Feder 18 der Rastbolzen 14B mit der Rastausnehmung 11B in Eingriff.

Bei einer erneuten Betätigung der Rasthebel 15A, 15B wird dieser Eingriff wieder aufgehoben und ein vollständiges Ausstellen des Deckels 3 in die in Fig. 2 strichpunktiert mit 3C angezogene Stellung ermöglicht. In dieser Position gerät der Rastbolzen 14A mit der Rastausnehmung 11C auf der gegenüberliegenden Seite des Schwenkhebels 10 in Eingriff.

Durch die versetzte Anordnung der Rastausnehmungen 11, 11A, 11B, 11C lassen sich auf einem Umfangswinkel von etwa 180° insgesamt vier Rastausnehmungen unterbringen, deren Durchmesser trotz des relativ geringen Abstandes zum Gelenkbolzen 13 und der dadurch kompakten Abmessung des Schwenkhebels 10 beträchtlich ist. Durch die Größe der Rastausnehmungen 11, 11A, 11B, und 11C wird ein Einsatz von stabilen, im Durchmesser ebenso starken Rastbolzen 14A bzw. 14B ermöglicht.

Die Dachflanschplatte 8 ist an ihrer Vorderkante mit einer nach unten offenen U-förmigen Ausnehmung 27 versehen. Sie weist ferner in ihrem Inneren eine nicht näher bezeichnete, senkrecht zur Ausnehmung 27 verlaufende Führungsbahn auf, in der ein Riegel 26 verschiebbar gelagert ist. Der Riegel 26 weist an seiner der Ausnehmung 27 zugewandten Seite eine Zunge 28 auf, die eine in etwa viertelkreisförmige Kontur aufweist, welche die Ausnehmung 27 nach unten hin abschließt. Die Dachflanschplatte 8 weist ferner an ihrer Oberseite eine quer zur Verschieberichtung des Riegels 26 verlaufende Tasche 30 auf, in welche eine Schenkelfeder 31 eingelegt wird, die sich mit einem Ende an einer Wandung der Tasche 30 und mit ihrem anderen Ende an einem Absatz 29 auf der Rückseite des Riegels 26 anlegt. Durch die Schenkelfeder 31 wird der Riegel 26 federnd in eine Stellung geschoben, in der die Zunge 28 die Ausnehmung 27 nach unten verschließt. An ihrer Unterseite weist die Zunge 28 vorne eine sich nach hinten öffnende Anschrägung 32 auf, durch welche das Einführen der Schwenkachse 9 in die Ausnehmung 27 erleichtert wird. Die Montage des Deckels 3 mit der daran angeordneten Ausstellvorrichtung 4 erfolgt dabei so, daß die vordere Schwenkachse des Deckels 3 mit dem Dachrahmen 6 in Eingriff gebracht wird und anschließend die hintere Schwenkachse 9 von unten her gegen die Zunge 28 gedrückt wird, wobei sich aufgrund der Anschrägung 32 der Riegel 26 kurzzeitig gegen den Druck der Schenkelfeder 31 nach hinten bewegt und das Einschnappen der Schwenkachse 9 in die Ausnehmung 27 ermöglicht. Anschließend bewegt sich die Zunge 27 durch den Federdruck selbsttätig in ihre die Ausnehmung 27 erschließende Stellung zurück.

Durch diese auch unabhängig von der vorliegenden Ausstellvorrichtung einsetzbare Anordnung ist eine besonders leichte Montage und Demontage des kompletten Deckels 3 mitsamt der Ausstellvorrichtung 4 möglich. Dabei ist die der Dachöffnung 2 zugewandte Stirnseite des Riegels 26 vorzugsweise so angeordnet, daß sie nur bei einer ganz bestimmten Stellung des Deckels 3 mittels eines Werkzeuges erreichbar ist. Zur Verhinderung eines Diebstahls des Deckels 3 kann dies die Schließposition des Deckels 3 sein, wobei dann der schalenförmig ausgebildete Ausstellhebel 12 an der Vorderseite eine entsprechende Aussparung für die Einführung des Entriegelungswerkzeugs (z.B. Schraubendreher) aufweist. Da Riegel 26 und Zunge 27 jedoch auch bei ausgestelltem Deckel 3 von außen her nicht sichtbar sind, kann der Ausstellhebel 12 auch derart ausgebildet und angeordnet sein, daß ein Zugriff auf die Stirnseite des Riegels 26 für eine Entnahme des Deckels 3 auch bei ausgestelltem Deckel 3 beispielsweise in der Position 3C möglich ist.

### Bezugszeichenliste

- 1: (festes) Fahrzeugdach
- 2: Dachöffnung
- 3: Deckel
- 4: Ausstellvorrichtung
- 5: Vorderkante (von 3)
- 6: Dachrahmen
- 7: Innenrahmen
- 8: Dachflanschplatte
- 9: Schwenkachse
- 10: Schwenkhebel
- 10A, 10B: Schenkel von 10
- 11,11A,11B,11C: Rastausnehmungen
- 12: Ausstellhebel
- 13: Gelenkbolzen
- 14A, 14B: Rastbolzen
- 15A, 15B: Rasthebel
- 16A, 16B: Drehachsen
- 17: Schraubbolzen
- 18: Feder
- 19: Bohrung
- 20: Bohrungen
- 21: Bolzen
- 22: Bohrungen
- 23: Deckelflanschplatte
- 24: Bohrungen
- 25: Bohrungen
- 26: Riegel
- 27: Ausnehmung
- 28: Zunge (an 26)
- 29: Absatz
- 30: Tasche
- 31: Schenkelfeder
- 32: Ausschrägung

## Patentansprüche

1. Ausstellvorrichtung (4) für ein Hebedach eines Fahrzeuges mit einem am festen Fahrzeugdach (1) angeordneten Schwenkhebel (10) und mit einem an einem ausstellbaren Deckel (3) angelenkten Ausstellhebel (12), die durch einen Gelenkbolzen (13) miteinander verbunden sind und die durch parallel zum Gelenkbolzen (13) wirksame, wenigstens ein bewegbares Element aufweisende Rastmittel in mehreren Positionen relativ zueinander verriegelbar sind, **dadurch gekennzeichnet**, daß die Rastmittel durch mehrere abwechselnd zu beiden Seiten versetzt zueinander auf einer Kreisbahn angeordnete Rastausnehmungen (11, 11A, 11 B, 11C) und durch zwei abwechselnd mit den Rastausnehmungen (11, 11A, 11B, 11C) der einen oder der anderen Seite in Eingriff bringbare Rastbolzen (14A, 14B) gebildet werden.

2. Ausstellvorrichtung nach Anspruch 1, **dadurch gekennzeichnet**, daß die Rastausnehmungen (11, 11A, 11B, 11C) eine halbkreisförmige Form aufweisen.

3. Ausstellvorrichtung nach Anspruch 1 oder 2, **dadurch gekennzeichnet**, daß die Rastausnehmungen (11, 11A, 11B, 11C) am Schwenkhebel (10) und die Rastbolzen (14A, 14B) am Ausstellhebel (12) gelagert sind.

4. Ausstellvorrichtung nach einem der Ansprüche 1 bis 3, **dadurch gekennzeichnet**, daß die Rastbolzen (14A, 14B) mittels Federn (18) in Richtung auf ihre Eingriffsstellung mit den Rastausnehmungen (11, 11A, 11B, 11C) vorbelastet sind.

5. Ausstellvorrichtung nach einem der vorhergehenden Ansprüche, **dadurch gekennzeichnet**, daß die Rastbolzen (14A, 14B) durch schwenkbar gelagerte Rasthebel (15A, 15B) betätigbar sind.

6. Ausstellvorrichtung nach Anspruch 4 und 5, **dadurch gekennzeichnet**, daß die Federn (18) am Rasthebel (15A, 15B) angreifen.

7. Ausstellvorrichtung nach Anspruch 5 und 6, **dadurch gekennzeichnet**, daß beide Rasthebel (15A, 15B) durch Zusammendrücken ihrer freien Enden die Rastbolzen (14A, 14B) außer Eingriff mit den Rastausnehmungen (11, 11A, 11B, 11C) bringen.

8. Ausstellvorrichtung nach Anspruch 5 bis 7, **dadurch gekennzeichnet**, daß die Federn (18) als Druckfedern ausgebildet sind, die an der Innenseite der freien enden der Rasthebel (15A, 15B) angreifen.

9. Ausstellvorrichtung nach Anspruch 1, **dadurch gekennzeichnet**, daß eine den Schwenkhebel (10) mit dem festen Fahrzeugdach (1) verbindende Schwenkachse (9) von einer U-förmigen Ausnehmung (27) an einer am festen Fahrzeugdach (1) angeordneten Dachflanschplatte (8) und von einer an dieser gegen Federdruck verschiebbar gelagerten Zunge (28) eines Riegels (26) gehalten wird, welche die Ausnehmung (27) an ihrem offenen Ende verschließt.

10. Ausstellvorrichtung nach Anspruch 9, **dadurch gekennzeichnet**, daß die Zunge (27) an ihrer Außenseite eine das Einführen der Schwenkachse (9) erleichternde Anschrägung (32) aufweist.

## Claims

1. A push-out device (4) for a tilting roof of a vehicle with a pivot lever (10) disposed on the fixed vehicle roof (1) and with a push-out lever (12) articulated on a cover (3) which is adapted to be pushed out and which are connected to each other by a hinge pin (13) and which by catch means comprising at least one movable element and effective parallel with the hinge pin (13) can be interlocked in a plurality of positions in relation to one another, characterised in that the catch means are constituted by a plurality of catch recesses (11, 11A, 11B, 11C) disposed alternately and in a staggered relationship on both sides on a circular path and by two catch pins (14A, 14B) adapted to be brought into engagement alternately with the catch recesses (11, 11A, 11B, 11C) on one side or the other.

2. A push-out device according to Claim 1, characterised in that the catch recesses (11, 11A, 11B, 11C) are semi-circular in shape.

3. A push-out device according to Claim 1 or 2, characterised in that the catch recesses (11, 11A, 11B, 11C) are mounted on the pivot lever (10) and the catch pins (14A, 14B) are mounted on the push-out lever (12).

4. A push-out device according to one of Claims 1 to 3, characterised in that the catch pins (14A, 14B) are pre-tensioned by springs (18) in the direction of their position in which they engage the catch recesses (11, 11A, 11B, 11C).

5. A push-out device according to one of the preceding Claims, characterised in that the catch pins (14A, 14B) can be actuated by pivotally mounted catch levers (15A, 15B).

6. A push-out device according to Claim 4 or 5, characterised in that the springs (18) engage the catch lever (15A, 15B).

7. A push-out device according to Claim 5 and 6, characterised in that both catch levers (15A, 15B), by their free ends being pressed together, bring the catch pins (14A, 14B) into disengagement from the catch recesses (11, 11A, 11B, 11C).

8. A push-out device according to Claim 5 to 7, characterised in that the springs (18) are constructed as thrust springs which engage the inside face of the free ends of the catch levers (15A, 15B).

9. A push-out device according to Claim 1, characterised in that a pivot spindle (9) connecting the pivot lever (10) to the fixed vehicle roof (1) is supported by a U-shaped recess (27) on a roof flange plate (8) disposed on the fixed vehicle roof (1) and by, displaceably mounted on this latter against spring pressure, a tongue (28) of a bolt (26) which occludes the recess (27) at its open end.

10. A push-out device according to Claim 9, characterised in that the tongue (27) has on its outside face a chamfer (32) which facilitates insertion of the pivot spindle (9).

## Revendications

1. Commande d'actionnement (4) d'un toit levant d'un véhicule automobile, comprenant un levier basculant (10) monté sur le toit fixe (1) et un levier de soulèvement (12) articulé au couvercle pouvant être soulevé (3), ces deux leviers étant reliés par un pivot d'articulation (13) et pouvant être verrouillés l'un sur l'autre dans plusieurs positions relatives par au moins un élément mobile, agissant parallèlement au pivot (13) et portant des moyens d'arrêt,
caractérisée en ce que
les moyens d'arrêt sont constitués d'évidements d'arrêt (11, 11A, 11B, 11C) disposés sur une piste circulaire et alternativement décalés d'un côté à l'autre, ainsi que de deux broches d'arrêt (14A, 14B) qui peuvent être amenées en prise alternativement avec les évidements (11, 11A, 11B, 11C) de l'un ou l'autre côté.

2. Commande d'actionnement selon la revendication 1,
caractérisée en ce que
les évidements d'arrêt (11, 11A, 11B, 11C) présentent une forme en demi-cercle.

3. Commande d'actionnement selon l'une des revendications 1 ou 2,
caractérisée en ce que
les évidements d'arrêt (11, 11A, 11B, 11C) sont montés sur le levier basculant (10) tandis que les pivots d'arrêt (14A, 14B) sont montés sur le levier de soulèvement (12).

4. Commande d'actionnement selon l'une des revendications 1 à 3,
caractérisée en ce que
les pivots d'arrêt (14A, 14B) sont sous la précontrainte de ressorts (18) agissant en direction de leur position d'engagement dans les évidements d'arrêt (11, 11A, 11B, 11C).

5. Commande d'actionnement selon l'une des revendications précédentes,
caractérisée en ce que
les broches d'arrêt (14A, 14B) peuvent être manoeuvrées grâce à un levier d'arrêt (15A, 15B) monté basculant.

6. Commande d'actionnement selon l'une des revendications 4 et 5,
caractérisée en ce que
les ressorts (18) sont en prise sur le levier d'arrêt (15A, 15B).

7. Commande d'actionnement selon l'une des revendications 5 et 6,
caractérisée en ce que
par compression de leurs extrémités libres, les deux leviers d'arrêt (15A, 15B) libèrent les broches d'arrêt (14A, 14B) de leur engagement dans les évidements d'arrêt (11, 11A, 11B, 11C).

8. Commande d'actionnement selon l'une des revendications 5 à 7,
caractérisée en ce que
les ressorts (18) sont des ressorts de poussée agissant sur la face interne des extrémités libres des leviers d'arrêt (15A, 15B).

9. Commande d'actionnement selon la revendication 1,
caractérisée en ce que
un axe de basculement (9) reliant le levier basculant (10) au toit fixe (1) est maintenu par un évidement (27) en forme d'U porté par une plaque à bride (8) montée sur le toit fixe (1) et par la languette (28) d'un verrou (26) pouvant coulisser contre la pression d'un ressort pour obturer l'évidement (27) à son extrémité ouverte.

10. Commande d'actionnement selon la revendication 9,
caractérisée en ce que
la languette (27) présente sur sa face externe une pente (32) facilitant l'engagement de l'axe de basculement (9).
